# EUROPEAN PATENT APPLICATION

(11) **EP 1 246 183 A2**
(43) Date of publication of application: **02.10.2002**
(21) Application number: 02076041.9
(22) Date of filing: 18.03.2002
(51) Int. Cl.: G11B 20/12, G11B 20/00, G07F 17/16

(54) **Catalog merchandising using hybrid optical disc**

(30) Priority: 28.03.2001 US 819232
(71) Applicant: EASTMAN KODAK COMPANY, Rochester, New York 14650 (US)
(72) Inventor: Mueller, William J., Rochester, New York 14650-2201 (US); Inchalik, Michael A., Rochester, New York 14650-2201 (US); Barnard, James A., Rochester, New York 14650-2201 (US)
(74) Representative: Nunney, Ronald Frederick Adolphe

(57) **Abstract**

A customizable optical disc for merchandising products or services comprising: a hybrid optical disc (10) having a ROM portion (14) and a RAM portion (18); the ROM portion (14) including a merchandiser's catalog information (20) of products or services which can be provided to a user; and the RAM portion (18) being written by the merchandiser to include user-specific information which personalizes the hybrid optical disc (10) for that specific user.

## Description

The present invention relates to a method for catalog merchandising using a hybrid optical disc such as a Programmable CD-ROM.

The use of optical storage, such as CD-ROM, can streamline production and use of large catalogs. A mail-order company can easily put a large catalog, which in paper form could weigh several pounds, onto a single compact disc. They can also add new features, such as multimedia presentations of their merchandise. If there are a large number of catalogs to be produced, the use of a mastered CD-ROM can make the production very economical. The more copies that a mail-order company produces, the more economical it is per copy.

However, a company may not want to produce a large number of catalogs, because changes such as new merchandise, discontinued merchandise, or price changes could make the current catalog obsolete. The company could be left with a large number of obsolete discs.

A similar situation can hold for various reference manuals, such as service manuals. Benefits to putting such works on an optical disc can include small size, ease of portability, and ease of searching. However, a service manual usually requires frequent updates, and this is not easy with a traditional CD-ROM system. Alternatives can include producing new CD-ROM discs, or supplying the updates on magnetic media or over the Internet, but these methods often add to the cost or lack of usability of the manual.

An alternative to this is the CD-R format. This is completely writeable, and would allow a company to update its discs later with new information. However, CD-R requires a large number of CD recorders to produce a large number of catalogs. The economics of CD-R are such that it is too costly and time-consuming to produce in large quantities, because each disc must be written individually in its entirety. This can be partially ameliorated through the use of a bank of multiple optical disc writers, which will write the common content to a number of discs simultaneously. Such a bank of multiple writers can entail a large capital expense, and it still is limited in its throughput. A bank of 20 high-speed writers (a large array) can require a week or more, running around the clock, to produce a medium-large (200,000 disc) run which includes 35 megabytes of data on the disc (only about 5% of the disc's capacity).

It is therefore an object of the present invention to provide a method of mass-producing merchandise catalogs that can be updated at a later date.

This object is achieved by a customizable optical disc for merchandising products or services comprising:
(a) a hybrid optical disc having a ROM portion and a RAM portion;
(b) the ROM portion including a merchandiser's catalog information of products or services which can be provided to a user; and
(c) the RAM portion being written by the merchandiser to include user-specific information which personalizes the hybrid optical disc for that specific user.

These objects are further achieved by a customizable optical disc for merchandising products or services comprising:
(a) a hybrid optical disc having a ROM portion and a RAM portion;
(b) the ROM portion including a merchandiser's catalog information of products or services which can be provided to a user; and
(c) the RAM portion being written by the merchandiser to include specific information which affects the presentation of the catalog information in the ROM portion when the optical disc is used by the user.

A merchandiser can produce an optical-disc version of a catalog or maintenance manual, and can produce it in large (and more economical) quantities without the fear that it will become obsolete. Updates can be quickly and easily written. The use of a stamped first session, which includes the catalog, lowers the cost of the bulk of the catalog, relative to writing it on a CD-R, while the hybrid characteristic maintains the flexibility for updating that CD-R would have for this use.

Another advantage is that the disc can be personalized before it is sent out. If the disc is sent to a prior customer, customer information such as gender, age, or geographical region can be included, and a special index of products most likely to appeal to this person can be presented. The disc can be used to record the customer's buying history, which can also be used to generate items in the personal index. There can be Internet security on the disc, so that a customer number is included that allows the customer to order securely.
FIG. 1a is a plane view of the hybrid optical disc after mastering with the catalog included;
FIG. 1b is a plane view of a hybrid optical disc that has been updated in accordance with this invention;
FIG. 2 is a block diagram showing the overall process for producing the original catalog discs, and using them in updates and flyers as described in this invention;
FIG. 3 is a block diagram showing in more detail the steps to create and produce the original (mastered) hybrid optical disc in accordance with this invention;
FIG. 4 is a schematic view of the file structure of the hybrid optical disc after mastering;
FIG. 5 is a block diagram showing the steps to update the hybrid optical disc;
FIG. 6 is a schematic view of the file structure of the hybrid optical disc after a catalog update in accordance with this invention;
FIG. 7 is a schematic view of the file structure of the hybrid optical disc after modifying it as a sales flyer in accordance with this invention;
FIG. 8 is a schematic view of the file structure of the hybrid optical disc after more than one catalog update in accordance with this invention;
FIG. 9a is a schematic view of one way to verify authenticity of a personalized catalog to effect ordering and making payment over a network in a secure manner;
FIG. 9b shows a method of forming a secure signature;
FIG. 10 is a schematic diagram of the software technique to encrypt the client application in a non-copyable way;
FIG. 11 is a schematic diagram of the use of this invention over a network;
FIG. 12 is a block diagram showing one process by which the end-user would use a hybrid optical disc according to this invention for communicating with a merchandiser's commerce site over a network, ordering and making payment for products or services, and providing a high degree of assurance that the information is secure from piracy.

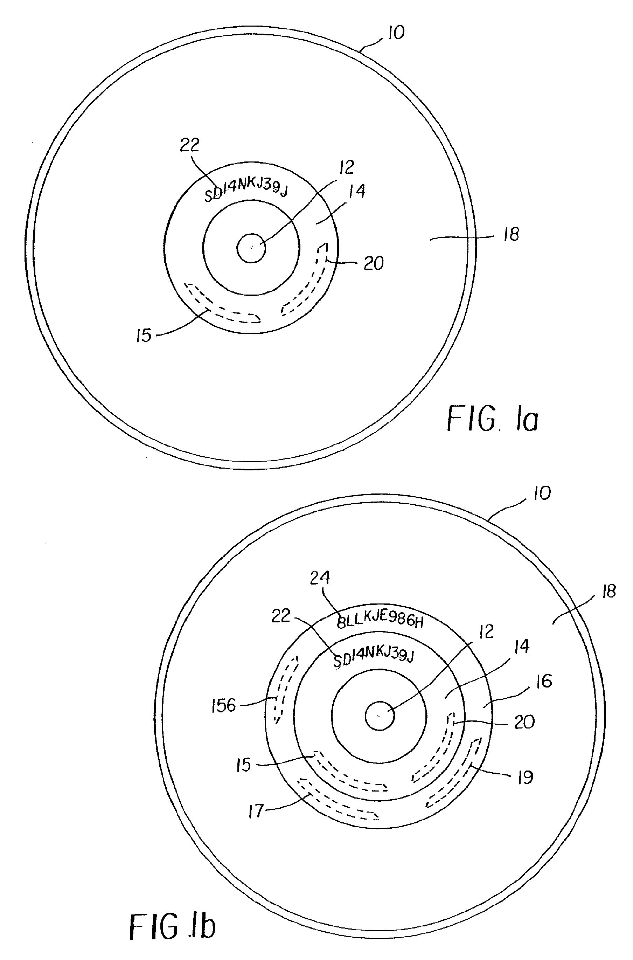

Turning now to FIG. 1a, we see a diagram of customizable optical disc 10 as mastered and manufactured. Customizable optical disc 10 is a hybrid optical disc; that is, it includes both a mastered pre-recorded area, also known as a ROM portion 14, and a recordable area, also known as a RAM writeable area 18. The disc includes a center hole 12 for clamping and spinning. The original programs and information are mastered as executable program 15 and catalog information 20, respectively, into ROM portion 14, which is shown in FIG. 1a as a first session on customizable optical disc 10. Additional mastered sessions are also possible. The remainder of the disc includes a recordable area called RAM writeable area 18. RAM writeable area 18 can be of a write-once type (e.g. CD-WO or CD-R) or a rewriteable type (e.g. CD-RW), which can be written to by standard optical-disc writing techniques. Customizable optical disc 10 can also include a preformed identification signature 22, which is a digital signal recorded during the mastering process and subsequently impressed into each customizable optical disc 10. Preformed identification signature 22 is recorded in such a way (e.g. in the ATIP signal) as to make it difficult for a pirate to copy.

Turning now to FIG. 1b, we see customizable optical disc 10 after it has been updated in accordance with this invention. In a part of RAM writeable area 18, a second session or RAM portion 16 has been written by a merchandiser. A merchandiser is defined as a person or entity engaged in the manufacture, sale, or resale of products and/or services who wishes to use customizable optical disc 10 to make available to end users a catalog of said products and/or services. RAM portion 16 can be a third or later session if customizable optical disc 10 already includes more than one session. RAM portion 16 can include specific information 17 that revises the original catalog information 20, and links to any information still valid in the previous session. RAM portion 16 can also include user-specific information 19, which personalizes customizable optical disc 10 for a specific user. RAM portion 16 can also include a unique identification number or unique ID, also known as user-specific encrypted information 24 that is written in one or more known absolute sector addresses in an encrypted manner. User-specific encrypted information 24 serves to make each disc unique. In some embodiments, RAM portion 16 can include other programs or information.

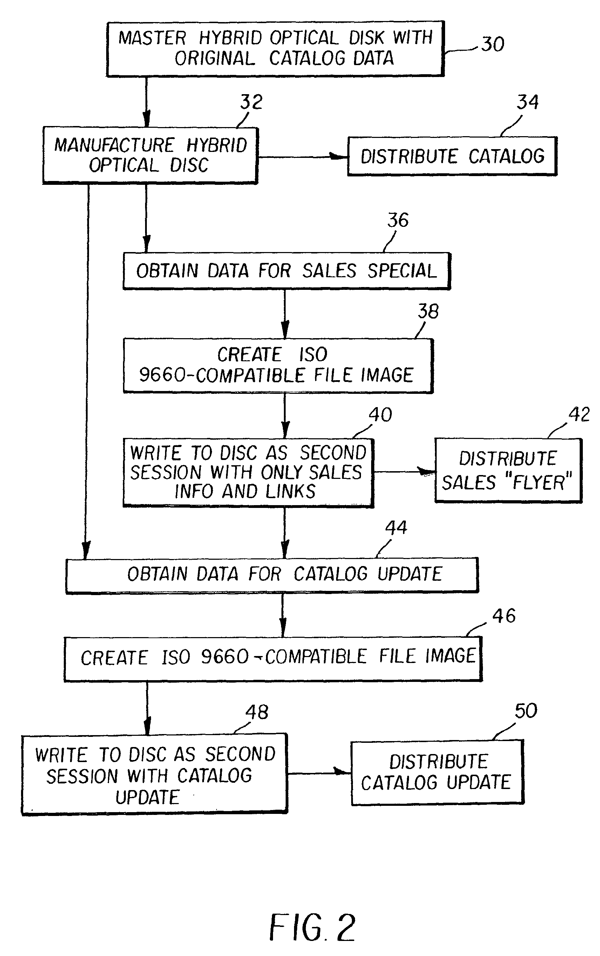

Turning now to FIG. 2, we see the overall steps to create an original catalog of preformed information on customizable optical disc 10, and how to use it for updated versions of the same catalog. The updates can be a revised version of the catalog or a promotional flyer. Besides this, which is used for the descriptive examples, a number of other applications are possible, (e.g. service manuals that must be updated on a regular basis).

The original catalog information 20 is supplied, along with executable program 15 for using and presenting this information to the viewer, and is mastered to a hybrid optical disc in step 30 to create ROM portion 14 on the disc. The mastered hybrid optical disc can optionally include preformed identification signature 22 in some embodiments, although that is not a requirement for all embodiments. The mastered disc is then used in manufacturing multiple copies of customizable optical disc 10 in step 32. At this point, customizable optical disc 10 includes the catalog or service manual that is current at the time of mastering, and can be distributed as the current version (step 34).

If a sales flyer is required, customizable optical discs 10 with the impressed catalog form the starting point. The merchandiser gathers information needed for the sales flyer in step 36. This information can include such information as what items are on special and what their prices are. This information is collated into an ISO 9660-compatible file image in step 38. It will include the sales information and links to the descriptions of on-sale items on the mastered portion of the customizable optical disc 10. The file image is then written in step 40, as a second session, to customizable optical disc 10, which contains the catalog in the first session. Customizable optical disc 10 can now be distributed as a sales flyer in step 42. The viewers will be presented foremost with the items that are on special.

If an update is required for the catalog or service manual, this can be done in a similar manner. First, the merchandiser gathers the updated information in step 44. This can include new items that were not in the original catalog or manual, and can also include an updated price list. The links to the original information are also reviewed, and any links to now-obsolete merchandise or procedures can be removed. This information is formatted into an ISO 9660-compatible file image in step 46 and written as a second or later session to customizable optical disc 10, which contains the catalog (step 48). Customizable optical disc 10 including the updated catalog can then be distributed as the current catalog in step 50.

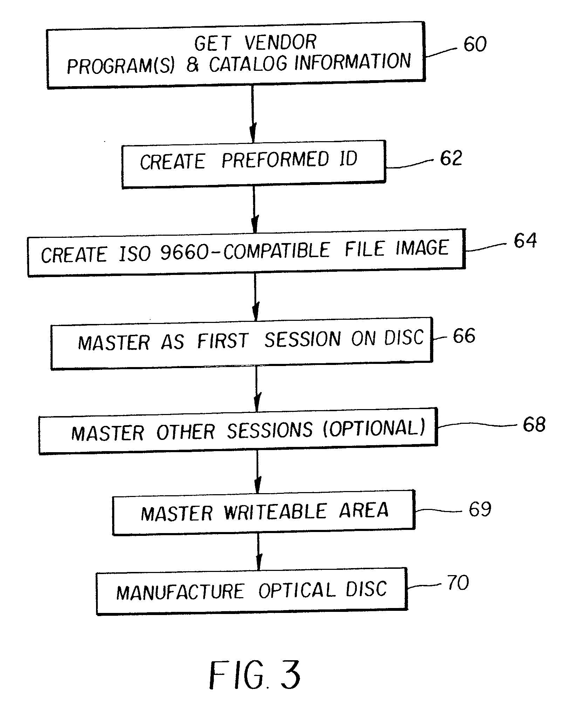

Turning now to FIG. 3, we see a block diagram showing some more details of the mastered information and the mastering process. If a catalog is involved, the merchandiser of the catalog must supply catalog information 20 and the necessary executable programs 15 for presenting this information to customers (step 60). The disc manufacturer optionally creates a unique preformed identification signature 22 in step 62. The information is processed in step 64 to produce an ISO 9660-compatible file image, which is then mastered to customizable optical disc 10 as ROM portion 14 in step 66. Other optional sessions can be mastered as well in step 68. The mastering process includes mastering the RAM writeable area 18 in step 69. Once the mastering process is complete, customizable optical disc 10 is manufactured from the master disc in step 70.

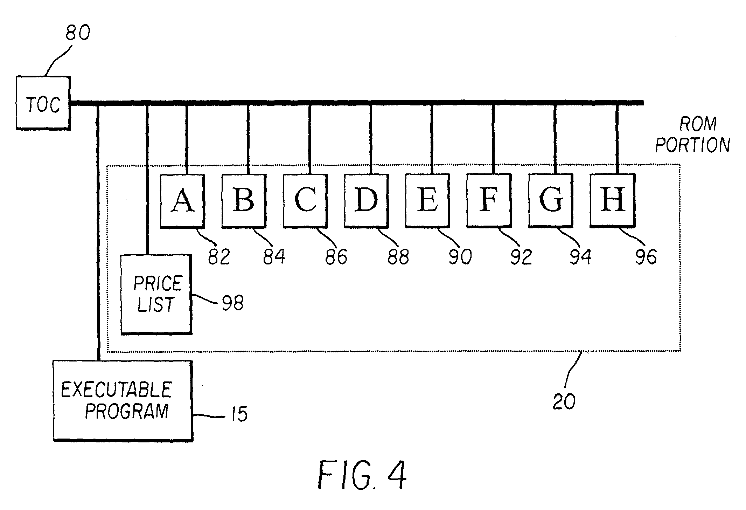

Turning now to FIG. 4, we see a schematic diagram of the logical structure of customizable optical disc 10 after mastering ROM portion 14. By ISO 9660 specifications, the session must start with a volume descriptor 80, which is a logical directory that describes the various files on customizable optical disc 10. ROM portion 14 also includes a number of files, each of which can correspond to an individual item (in the case of a catalog) or an individual procedure (in the case of a manual). In this diagram, these items are shown schematically as catalog items 82 to 96, which are products or services that can be provided to a user by a merchandiser. If the session is a catalog, it can include a current price list 98. These items are all included in catalog information 20. The session will also include catalog presentation executable 15. Volume descriptor 80 will include pointers to all items in ROM portion 14.

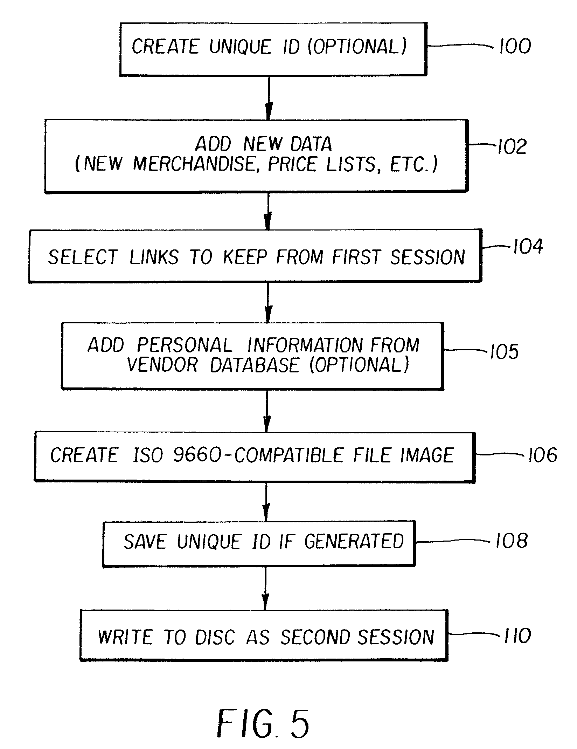

Turning now to FIG. 5, we see a block diagram for creating an updated catalog in accordance with this invention. User-specific encrypted information 24 is optionally created in step 100. In step 102, new information is obtained from the merchandiser. This new information can include files describing new or updated merchandise. There can be a new price list. In the case of a manual, the updates can include new or updated procedures. The content provider must also include links to information that is still valid from the first session (step 104). In optional step 105, user-specific information 19 from the merchandiser can also be added to customize the preformed catalog information 20 for the intended recipient. This personalization can range from simple use of the end-user's name to presenting catalog items based on the user's interests and/or needs. For example, a clothing catalog can present petite clothes first if the end-user is known to be petite. If the end-user has expressed interest in tennis, a sporting-goods catalog can present tennis equipment at the "front" of the catalog. In step 106, this information is included in an ISO 9660-compatible file image. User-specific encrypted information 24, if generated, is inserted into the ISO image in step 108. The information package is then written to the disc as RAM portion 16 (step 110).

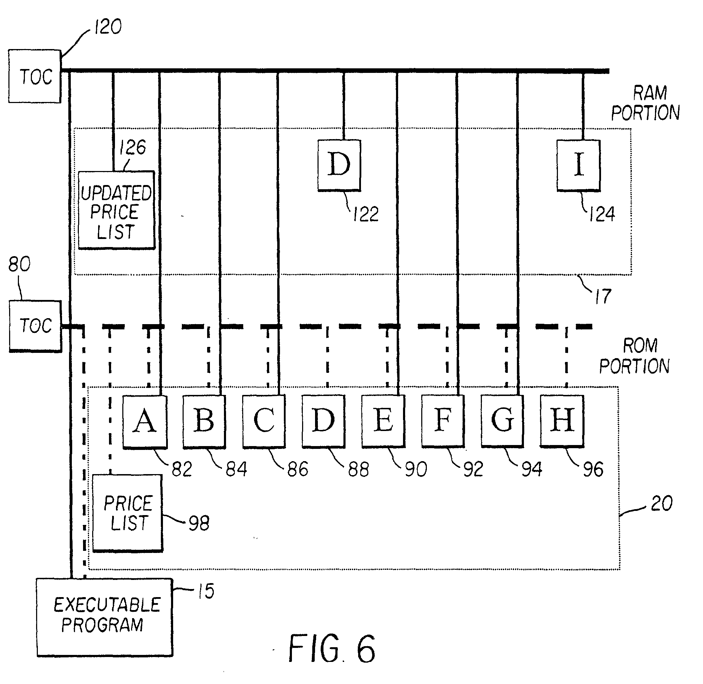

Turning now to FIG. 6, we see a schematic diagram of the logical structure of the disc after writing RAM portion 16 for a catalog update. In this example, RAM portion 16 includes a new catalog item 122 description which revises the corresponding catalog item 88 in ROM portion 14, and a new catalog item 124. An updated price list 126 is also included. The second volume descriptor 120 includes information about the new files, and information about the locations of some of the catalog items (82, 84, 86, 90, 92, and 94) in ROM portion 14. Catalog item 88 has been excluded and substituted with updated catalog item 122. This allows the description of item D to be updated. Catalog item 96 is not included, which allows item H to be removed from the catalog. Catalog item 124 is new, which allows new items to be added to the catalog. Second volume descriptor 120 now has all the information required for the current catalog, and replaces and supercedes prior-formed corresponding volume descriptor 80 in ROM portion 14. This affects the presentation of the catalog to the user; that is, it has allowed a completely updated catalog to be presented to the consumer, while only writing a small number of updated items and the new table of contents. A similar process can be used with an updated reference manual.

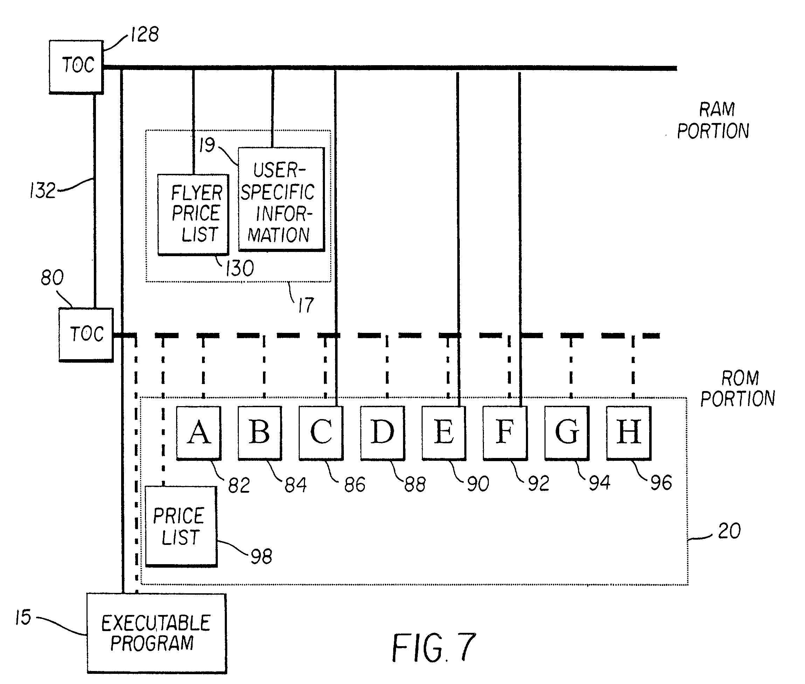

Turning now to FIG. 7, we see a schematic diagram of the logical structure of the disc after writing RAM portion 16 for a sales flyer. In this example, a company wishes to put a number of existing catalog items on special sale, but there are no new items. ROM portion 14 of customizable optical disc 10 still includes all the files 82 through 98 originally mastered to customizable optical disc 10. RAM portion 16 includes a second volume descriptor 128 and a flyer price list 130 of special prices. Also included in this example is user-specific information 19, which was added in step 105. Volume descriptor 128 includes links to the catalog items (86, 90, and 92) on special offer. This allows a merchandiser to provide a sales flyer with complete catalog descriptions (e.g. catalog item 86) without having to write or rewrite each one, because they were originally included in customizable optical disc 10. A small amount of information (volume descriptor 128 and flyer price list 130) needs to be written to each disc, while the full descriptions of every item are available. There is also a link 132 to the first volume descriptor 80, to allow access to the entire catalog information 20 if the consumer desires. Specific information 17 has thus changed the operation of catalog information 20 from a full catalog to a sales flyer with a full-catalog backup. Second volume descriptor 128 now has all the information required for the sales flyer, and replaces and modifies the function of prior-formed corresponding volume descriptor 80 in ROM portion 14. As described above, user-specific information 19 has changed the presentation of the catalog to the user, and thus has personalized customizable optical disc 10 for the user. This personalization can be as simple as presenting the catalog information with the user's name. Alternatively, it can provide a specification for ordering customized products or services. By this, we mean that the presentation of the catalog information can be customized based on information known about the particular user. For example, if the merchandiser knows the clothing size of the user, the specification can present appropriate-sized clothing (e.g. petite). As another example, the specification can present a picture of how selected clothing would look on a person of the given size. As another example, if the merchandiser knows that the user is a sports fan, the specification can cause sports-related merchandise to be featured in the presentation.

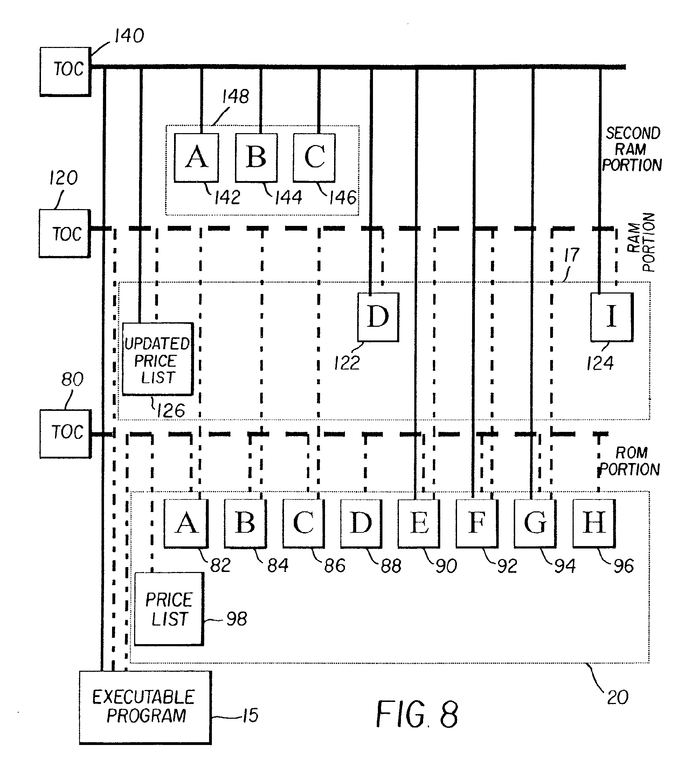

These processes can be repeated a number of times so long as unrecorded RAM writeable area 18 remains on customizable optical disc 10. Turning next to FIG. 8, we see a schematic diagram of a catalog that has undergone two updates. In other words, the original catalog from FIG. 4 has undergone a first update (as in FIG. 6) and has subsequently undergone a second update. In this update, catalog items 82, 84, and 86 have been replaced by catalog items 142, 144, and 146, respectively. These have been written in a second RAM portion of customizable optical disc 10. This portion also includes a third volume descriptor 140, which replaces and supersedes all prior-formed corresponding volume descriptors (80 and 120) in the prior portions.

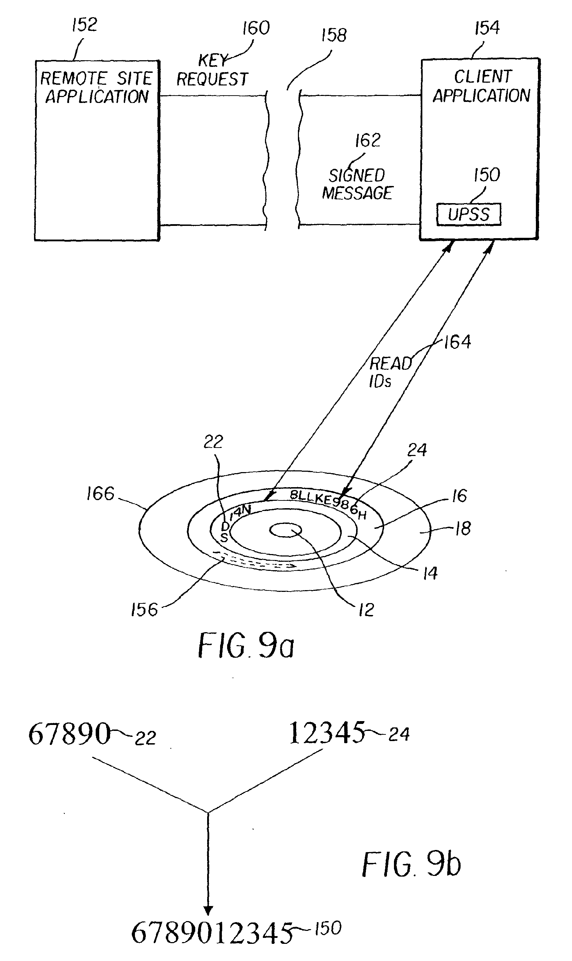

Additional security features can allow the end-user to securely order and pay for the products or services from the catalog via a network connection. A customizable optical disc 10 that has these features is also called a credit or debit copy-protected optical disc. Turning now to FIG. 9a, we see a schematic view of one way that the end-user can make payment in a secure manner using credit or debit copy-protected optical disc 166. Secure payment can be effected by using two routines which can communicate with each other from physically-separated but connected computers, i.e. over a network 158 (e.g. the Internet) in a secure manner. The first routine is commerce site application or remote site application 152, which exists on the commerce site or a support site, and can verify the authenticity of credit or debit copy-protected optical disc 166. The second routine is client application 154, which is originally encrypted on credit or debit copy-protected optical disc 166 as encrypted client application package 156. Client application 154 is designed to read (step 164) preformed identification signature 22 and user-specific encrypted information 24 from credit or debit copy-protected optical disc 166, create user-personalized secure signature 150, and send it in a secure message to remote site application 152. Remote site application 152 first sends key request 160, for a decryption key, to client application 154. This transmission takes place over network 158 via any of a number of well-known protocols (e.g. TCP/IP, secure TCP/IP). Included in key request 160 is a message to use one of a number of keys to sign the message when answering the request. Client application 154 returns the card number (e.g. user-personalized secure signature 150) to remote site application 152 in signed message 162, which is signed with a private key. Remote site application 152 possesses the public key, and can verify the authenticity of signed message 162, and therefore of credit or debit copy-protected optical disc 166.

Turning now to FIG. 9b, we see one method of forming a secure signature. Preformed identification signature 22 and user-specific encrypted information 24 are concatenated to provide user-personalized secure signature 150.

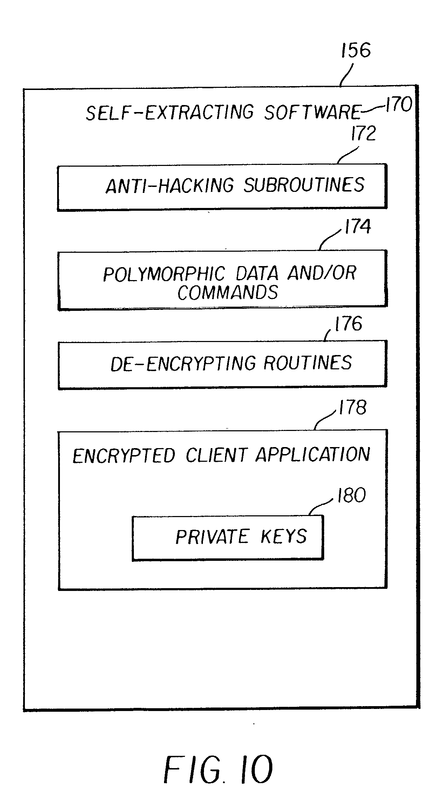

Turning next to FIG. 10, we see a diagram of one way of encrypting client application 154 for use in this invention. Encrypted client application package 156 is written to credit or debit copy-protected optical disc 166. It includes client application 154, which has been encrypted as encrypted client application 178. Encrypted client application package 156 appears as a single executable program and includes self-extracting software 170, which runs first. The package also includes anti-hacking routines 172 to check for the presence of piracy-type routines (e.g. hacking software, kernel debuggers) in memory when the program is run. There can also be a section of polymorphic data and/or commands 174. Polymorphic code generally provides multiple paths which achieve the same results, but are constructed in such a way that a program follows a different path each time it executes. Polymorphic code is used to make the program more difficult to reverse-engineer. De-encrypting routines 176 are designed to use data on credit or debit copy-protected optical disc 166 (preformed identification signature 22 and user-specific encrypted information 24) to de-encrypt the encrypted client application 178. Encrypted client application package 156 also includes a private keys area 180, which includes private encryption keys that are used to verify the authenticity and integrity of credit or debit copy-protected optical disc 166 in a secure manner by utilizing public key encryption.

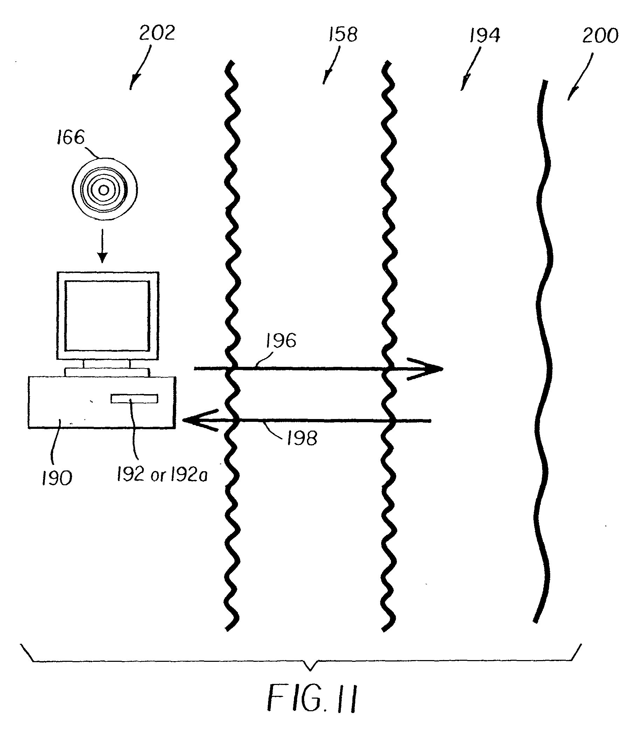

Turning now to FIG. 11, we see a schematic diagram of the use of this invention over Internet or other network 158. Personal computer 190, which includes CD reader 192 or CD reader/writer 192a and can be at the end-user's home site 202, is connected via the Internet or other network 158 to a merchandiser's commerce site 194. Merchandiser's commerce site 194 can also be intimately connected to support site 200 (e.g. a banking site or a credit card site), which is a common commercial relationship.

To pay for a purchase, an end-user has his/her credit or debit copy-protected optical disc 166, which is also the catalog, in CD reader 192 or CD reader/writer 192a in personal computer 190. Information is transferred between credit or debit copy-protected optical disc 166 and merchandiser's commerce site 194 via a secure connection. This information transfer can be either initiated by client application 154 on credit or debit copy-protected optical disc 166 (CD-Push operation 196) or by merchandiser's commerce site 194 (Web-Pull operation 198). Information is also transferred between merchandiser's commerce site 194 and support site 200. This allows the transaction to be transacted properly at the financial institution or credit clearance center.

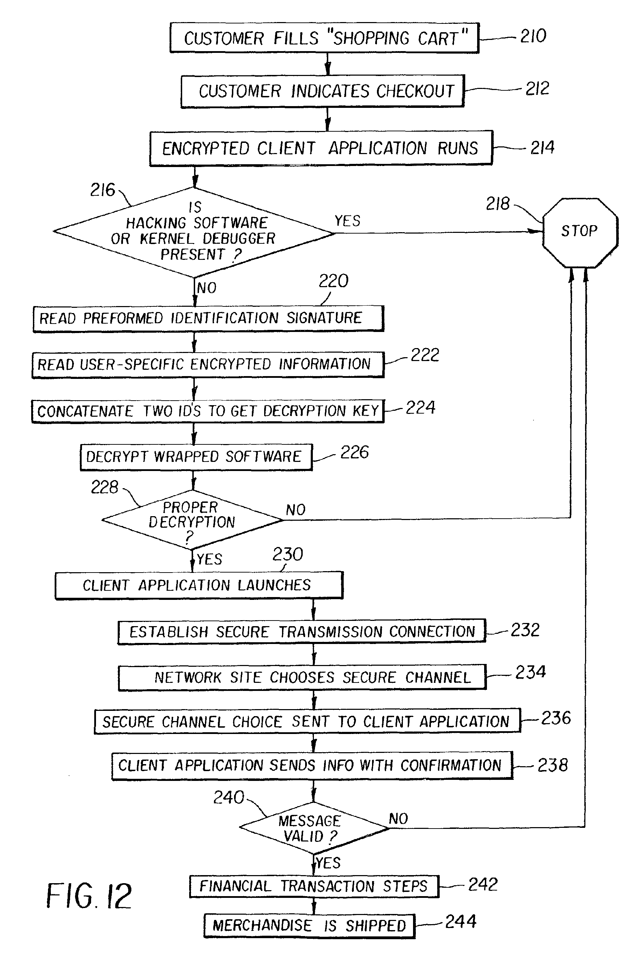

Turning now to FIG. 12, we see a block diagram showing one process by which the end-user would use a hybrid optical disc according to this invention for communicating with a merchandiser's commerce site over the Internet or other network 158, ordering and making payment for products or services, and especially of providing a high degree of assurance that the information on credit or debit copy-protected optical disc 166 is secure from piracy. In step 210, a user views the catalog on credit or debit copy-protected optical disc 166 and selects items to purchase, and then indicates purchase completion (step 212). The catalog then launches encrypted client application package 156 in step 214. Encrypted client application package 156 includes anti-hacking routines 172 that first look for hacking software or kernel debugging software (step 216), which would enable a pirate to follow the workings of the programs on credit or debit copy-protected optical disc 166. If this hacking software is found, the execution of the program stops (step 218). If no such software is found, the self-extracting software 170 proceeds to read preformed identification signature 22 (step 220) and user-specific encrypted information 24 (step 222). The two ID's are concatenated in step 224 to get user-personalized secure signature 150, which also serves as the decryption key used to decrypt the encrypted client application 178 in step 226. In step 228, if the decryption is improper, the program stops (step 218).

If the decryption was successful, client application 154 is launched in step 230. Client application 154 then establishes a secure connection with remote site application 152 at merchandiser's commerce site 194 in step 232. Once the connection is established, a secure channel is selected from a multiplicity of such channels, each of which is a public key/private key combination. Remote site application 152 randomly chooses a secure channel from those available to it (step 234) and sends client application 154 a key request 160 for user-personalized secure signature 150 to be sent in a signed message 162 (step 236). Client application 154 then creates a message which includes user-personalized secure signature 150, signs the message with the private key requested by remote site application 152, and sends signed message 162 to merchandiser's commerce site 194 (step 238).

Remote site application 152 receives signed message 162 and, in step 240, uses the selected public key to verify the identity of credit or debit copy-protected optical disc 166. If the check fails, the process stops (step 218) and no further transactions are performed. Presumably this is because credit or debit copy-protected optical disc 166 is counterfeit or damaged in some way. If the public-key confirms that signed message 162 is valid, and therefore credit or debit copy-protected optical disc 166 is valid, remote site application 152 and client application 154 continue with the financial transaction steps (step 242), after which the merchandise can be shipped (step 244).

## Claims

1. A customizable optical disc for merchandising products or services comprising:
(a) a hybrid optical disc having a ROM portion and a RAM portion;
(b) the ROM portion including a merchandiser's catalog information of products or services which can be provided to a user; and
(c) the RAM portion being written by the merchandiser to include user-specific information which personalizes the hybrid optical disc for that specific user.

2. A customizable optical disc for merchandising products or services comprising:
(a) a hybrid optical disc having a ROM portion and a RAM portion;
(b) the ROM portion including a merchandiser's catalog information of products or services which can be provided to a user; and
(c) the RAM portion being written by the merchandiser to include specific information which affects the presentation of the catalog information in the ROM portion when the hybrid optical disc is used by the user.

3. The customizable optical disc of claim 2 wherein the RAM portion further includes user-specific information that personalizes the optical disc for that specific user.

4. A customizable optical disc for merchandising products or services comprising:
(a) a hybrid optical disc having a ROM portion and a RAM portion;
(b) the ROM portion including a merchandiser's catalog information of products or services which can be provided to a user and a preformed identification signature which is impressed into the ROM portion of the hybrid optical disc and is arranged to be difficult for a pirate to copy; and
(c) the RAM portion being written by the merchandiser to include user-specific encrypted information which makes the hybrid optical disc unique for that specific user and in combination with the ROM preformed identification signature provides a user-personalized secure signature, so that a user can communicate over the network to make payment for ordered products or services with a high degree of assurance that the information on the hybrid optical disc is secure from piracy.

5. The customizable optical disc according to claim 4 further including user-specific information which personalizes the hybrid optical disc for that specific user.

6. The customizable optical disc according to claim 4 further including specific information which affects the presentation of the catalog information in the ROM portion when the hybrid optical disc is used by the user.

7. A method for a user communicating with a merchandiser comprising the steps of:
(a) providing a customizable optical disc for merchandising products or services comprising a hybrid optical disc having a ROM portion and a RAM portion;
(b) providing the ROM portion to include a merchandiser's catalog information of products or services which can be provided to a user and a preformed identification signature which is impressed into the ROM portion of the hybrid optical disc and is arranged to be difficult for a pirate to copy, and information which permits access to the merchandiser's commerce site;
(c) writing the RAM portion by the merchandiser to include user-specific encrypted information which personalizes the hybrid optical disc for that specific user and in combination with the ROM preformed identification signature provides a user-personalized secure signature, so that a user can communicate over the network to make payment for ordered products or services with a high degree of assurance that the information on the hybrid optical disc is secure from piracy; and
(d) a user communicating to the merchandiser's commerce site to conduct transactions including ordering products or services and making payment for such products or services.

8. The method of claim 7 further including providing a specification for ordering customized products or services.
